# EUROPEAN PATENT SPECIFICATION

(11) **EP 0 961 374 B1**
(45) Date of publication and mention of the grant of the patent: **27.09.2000**
(21) Application number: 98830184.2
(22) Date of filing: 27.03.1998
(51) Int. Cl.: H02B 1/00, H02B 1/46, F16B 19/10, H05K 5/00

(54) **A box for electric material having a removable cover and cover fixing means**
Gehäuse für elektrische Geräte mit abnehmbarem Deckel und Deckelbefestigungsanordnung
Boîtier pour équipement électrique avec couvercle détachable et moyen de fixation du couvercle

(43) Date of publication of application: 01.12.1999
(73) Proprietor: Bertoldo & C. Srl, 10078 Venaria Reale (Torino) (IT)
(72) Inventor: Bertoldo, Piero, 10070 Balangero, Torino (IT)
(74) Representative: Marchitelli, Mauro

(56) References cited:
- CH-A- 669 480
- DE-A- 3 612 975
- DE-A- 19 527 053
- US-A- 3 918 130
- US-A- 4 786 225
- US-A- 5 531 535

## Description

The present invention relates to a box for electric material which can be used in domestic or industrial electric installations as a pull box or as a housing for containing electric or electronic apparatus.

The boxes of the more common type comprise a box-shaped base intended to be fixed to a wall and a cover fixed to the base by screws.

DE 195 27 053 A discloses a housing of plastics material with a cover and base. The cover is attached to the base by fixing means which comprise a pair of spaced, resilient arms on the cover, each terminating in a lip. When the housing is closed, the lips engage behind rigid projections on the base. The lips are bevelled on both sides, so that they can ride easily over the projections in both directions. The fixing means are locked in the closed position by sliding a pin member between the spaced arms. When fully inserted, the pin member prevents the arms from flexing and thus locks the lips behind the projections.

CH 669 480 A concerns a mounting frame for an electrical component, such as a socket, which comprises a base and a component mounting plate, each with peripheral walls which overlap to form an enclosure. The base has a pair of diagonally opposed, upstanding, hollow cylindrical members. The cover or mounting plate is provided with a pair of hollow tubular elements, which have respective elastically deformable, distal stop portions and are received in the cylindrical members , in which they can assume a disengagement position and an engagement position. Fixing means comprises a threaded bolt with an expansion element mounted on its lower end. When the bolt is rotated, the expansion element is pulled upward and deforms the stop portion of the tubular element, jamming it in the hollow cylinder. The object of this arrangement is to allow a continuous adjustment of the height of the mounting plate over the base.

Fixing means comprising an expansible grommet and an expander plunger are known per se, usually for joining two generally flat elements (see, e.g., US 3 918 130 A).

The present invention has the object to provice a box for electric material provided with an improved system for fixing the cover to the base, which permits to open and close the box more simply and rapidly.

According to the present invention, this object is achieved by a box having the features forming the subject of the independent claim.

Further characteristics and advantages of the present invention will become evident in the course of the detailed description which follows, given purely by way of non-limiting example, with reference to the annexed drawings, in which:
- figure **1** is a perspective view of a box according to the present invention in open position,
- figure **2** is a cross-section along the line II-II of figure 1,
- figure **3** is a perspective view of the box of figure 1 in closed position,
- figures **4** and **5** are cross-sections according to lines IV-IV and V-V of figure 3,
- figure **6** is a cross-section in greater scale of the part indicated by the arrow VI in figure 4,
- figure 7 is an enlarged detail of figure 6, and
- figures **8** and **9** are cross-sections corresponding to figure 6 and showing the positions in which the cover is locked and, respectively, removed from the base.

With reference to the drawings, 10 indicates a box for electric material comprising a box-shaped base 12 and a removable cover 13. The base 12 has a bottom wall 16 and four lateral walls 14 which define an upper aperture 40. In the lateral walls 14 are intended to be formed a plurality of through apertures 18 for the connection to the base 12 of couplings (not shown) for protection elements for electric installations, as for example conduits, sheaths etc. The lateral walls 12 may have non-through notches which define lines of preferential breaking for the formation of the apertures 18. In alternative, the box could be deprived of notches and in this case the through apertures 18 could be formed by a drilling tool of a type per se known. The base 12 has four uprights 20 each of which has a seat 22 for the engagement by fastening means carried by the cover 12. Each seat 22 can be formed integrally by injection moulding with the remaining part of the base 12. In alternative as disclosed in a contemporary patent application of the same Applicant titled "A box for electric material having aligned seats for fixing a cover and for fixing the box to a wall", each seat 22 could be formed by a separated element fixed, for example snap-engaged, to the upright 20. Each seat 22 is arranged in correspondence with a cavity 24 formed in the respective upright 20. As disclosed in the contemporary patent application mentioned above, this cavity serves for receiving a separate element provided with a through hole for a screw (not shown) for fixing the base 12 to a wall. The cavity 24 is preferably insulated from the internal volume of the base 12 by an internal wall 26 to avoid infiltration of liquids or humidity into the box trough the fixing zone. Each upright 20 can be provided with small apertures 28 for the snap engagement of said separate element (not shown) which serves for the abutment of the head of the fixing screw. This solution, in addition to provide liquid-tightness in the fixing zone, permits to obtain an electric insulation of class II because the metallic screws are separated from the internal volume by a plastic wall.

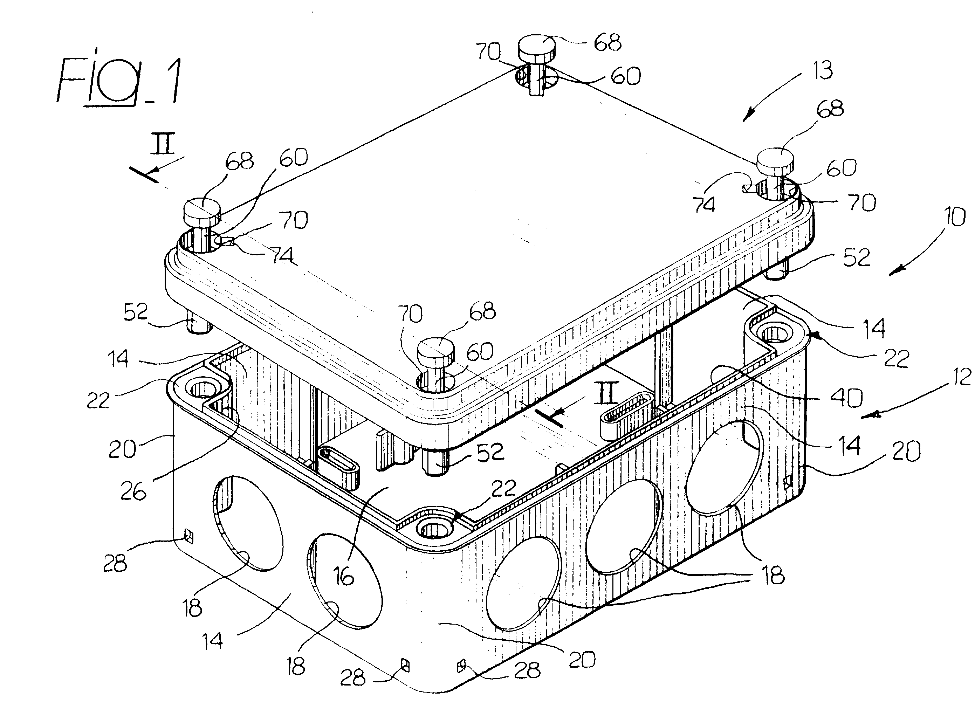

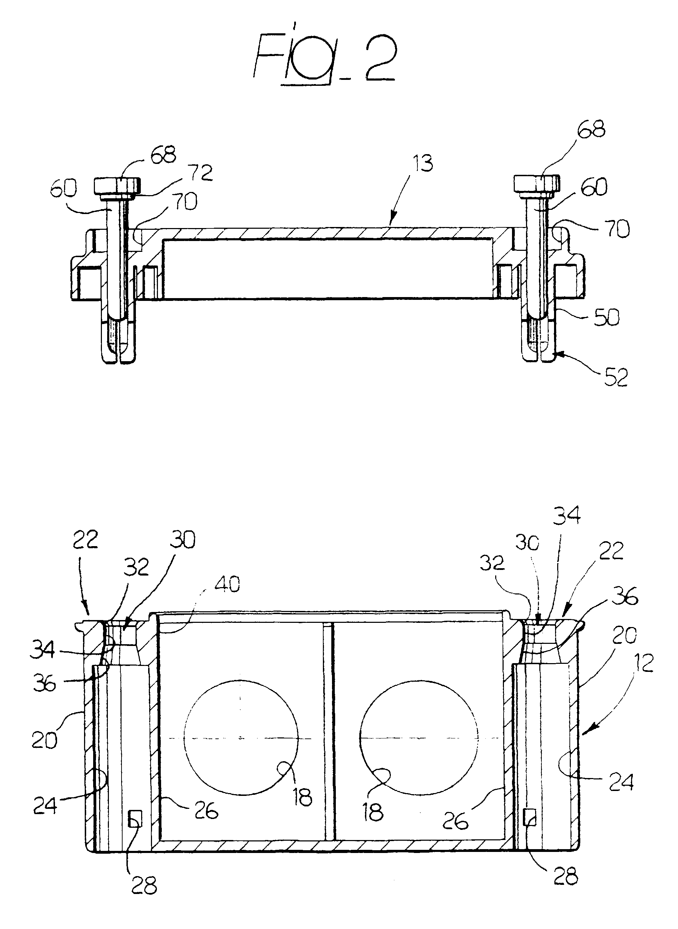

With reference in particular to figures 2 and 9, each seat 22 has a through hole 30 with an axis parallel to the lateral walls 14. The hole 30 has a bevelled portion 32, a cylindrical portion 34 and a frusto-conical portion 36 widening towards the cavity 24.

With reference to figures 2 and 4-9, the cover 13 has a shape and dimensions determined so as to engage the upper edge of the lateral walls 14 for closing the upper aperture 40 of the base 12. The cover 13 is made of injection moulded plastic material and has a bearing surface 42 which is intended to abut against a corresponding surface 44 of the base 12 for defining the close position of the cover. Depending on the needs, the closure of the box 10 can be formed as a simple closure against the entry of powder and extraneous materials, without particular guarantees of tightness to liquids. In alternative, the closure of the box 10 could be formed so as to render the box liquid-tight. In this respect, in the cover 13 is formed a perimetral seat 46 adapted to receive a seal when it is desired to produce a box with liquid-tightness characteristics. The seal (not shown in the figures) in the closed position is compressed against a surface 48 provided on the upper edge of the base 12. This seal could be formed by a separate component inserted in the perimetral seat 46 or could be formed directly into the seat 46 by deposition of either thermofusible material (hot melt) or materials belonging to the family of polyurethanes.

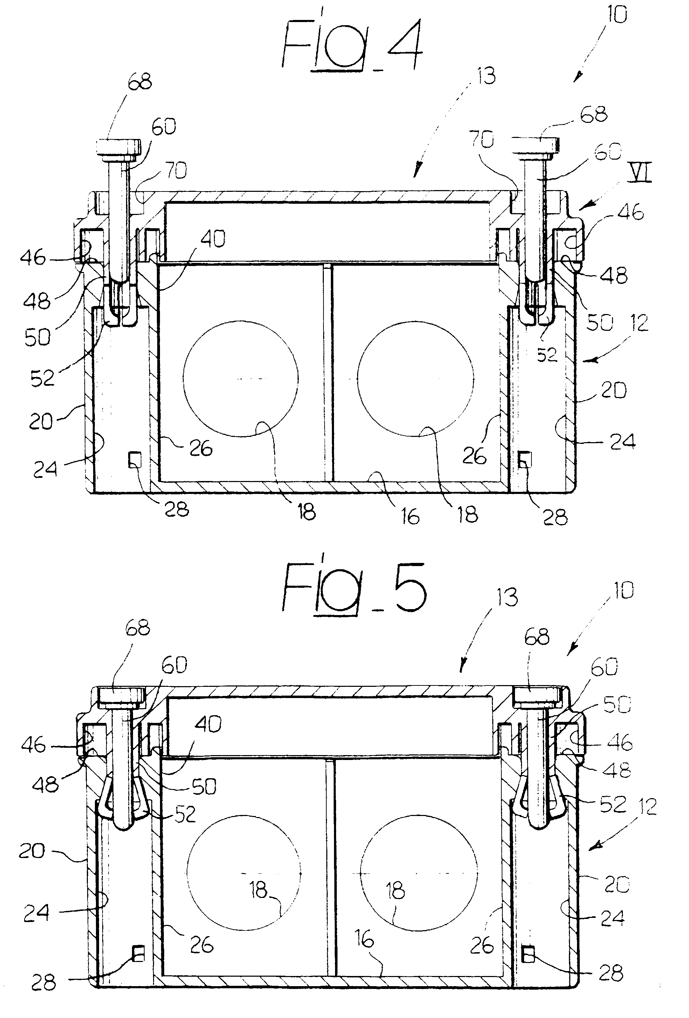

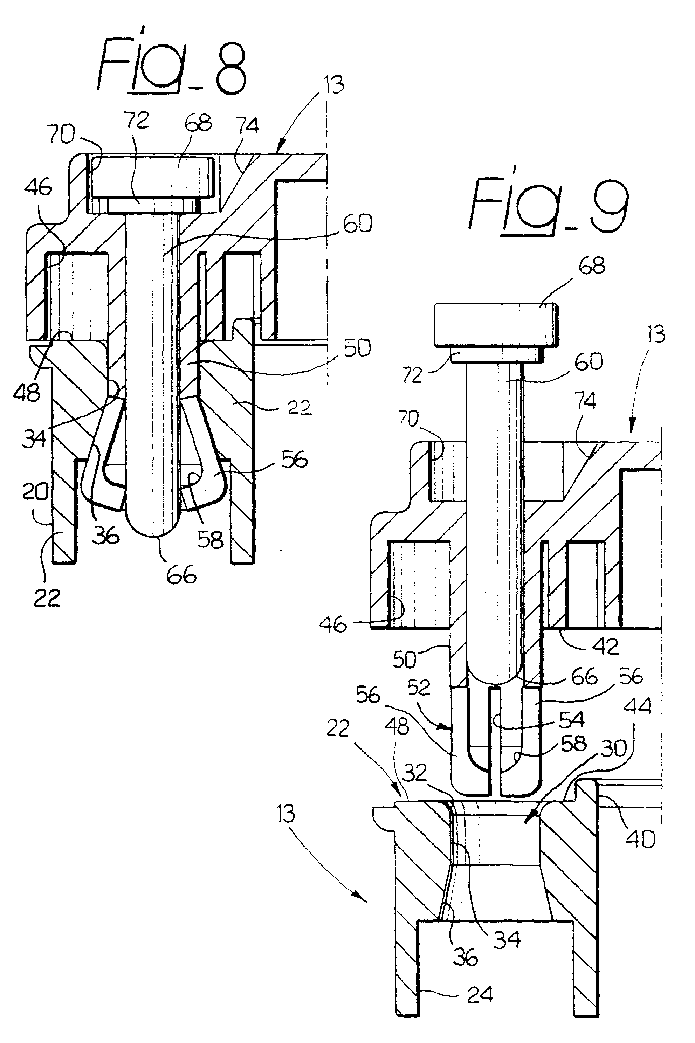

Referring always to figures 2 and 4-9, the cover 13 is provided with engagement means placed in correspondence with the seats 22 and adapted to secure the cover 13 to the base 12. Each of said engagement means comprises a tubular element 50 having an external diameter which permits a freely slidable engagement in the portion 34 of the through hole 30. The tubular element 50 is fixed to the cover 13 and is preferably integrally formed during moulding of the cover. The tubular element 50 has at its end an elastically deformable stop portion 52. The stop portion 52 has a plurality of longitudinal through slots 54 which divide the terminal portion of the tubular element 50 in a set of stop tabs 56 which can be deformed elastically independently of each other. The stop tabs 56 have an internal arcuate surface 58 which reduces the inner diameter of the tubular element 50. In the embodiment shown in the figures, the longitudinal extension of the stop tabs 56 is such that in the closed position the base of the tabs 56 is placed approximately in correspondence with the minimum diameter of the frusto-conical portion 36 (see in particular figure 6).

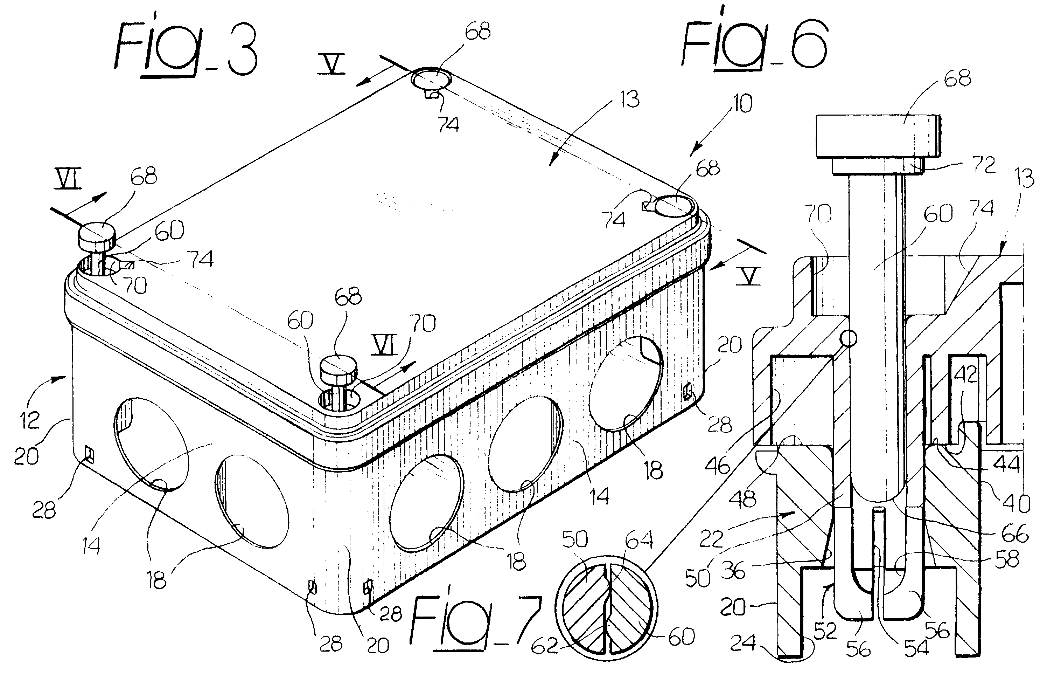

The means for fixing the cover 13 comprise a pin 60 slidably mounted inside each tubular element 50. The outer diameter of the pin 50 is substantially equal to the inner diameter of the tubular element 50 but the tolerances between these two elements permit to the pin 60 to slide in the direction of its longitudinal axis between a pulled out position shown in figures 2, 4, 6 and 9 and an inserted position shown in figures 5 and 8. As shown in the detail of figure 7, on the outer surface of the pin 7 can be formed a small annular projection 62 which co-operates with an annular projection 64 provided on the inner surface of the tubular element 50, for preventing an accidental removal of the pin. The pin 60 has a rounded end 66 which is intended to act on the rounded surfaces 58 of the stop tabs 50 for producing their outward deformation. The pin 60 has a head 68 which, in the inserted position of the pin 60, penetrates in a recessed seat 70 formed on the upper surface of the cover 13. Between the stem 60 and the head 68 of the pin is interposed an intermediate portion 72 with a smaller diameter than that of the head 68. In this way, when the pin is in the inserted position, a free space exists between the head 68 and the bottom of the seat 70 which permits the insertion of a tool, for example the point of a screwdriver, for the extraction of the pin. In order to facilitate the extraction of the pin 60, the seat 70 is preferably provided with an inclined surface 74 which connects the bottom of the seat 70 with the upper surface of the cover 13.

With reference to figures 2 and 9, when the cover is separated from the base 12 the pins 60 are in their pulled out position and the stop portion 52 of the tubular element 50 is in undeformed position. In this situation, the cover 13 is placed on the upper aperture of the base 12 and the stop portions 52 are inserted through the portion 34 of the respective through holes 30.

Figures 4 and 6 show the box in the configuration in which the cover 13 is mounted on the base 12 but is not yet locked. The cover 13 is locked by simply pushing downwardly the pins 60. This operation is done manually without the need of using tools since the force to be applied on the pin is very small. With reference to figures 5 and 8, an outward deformation of the respective stop portion 52 is obtained by pushing downwardly the pin 60. The stop tabs 56 are deformed outwardly and enter into contact with the frusto-conical surface 36. In this position, the cover 13 is fixed to the base 12. The fixing is irreversible because a traction force possibly applied on the cover 13 does not produce a movement backward of the pin 60. The fastening force guaranteed by this system is comparable to that of the traditional fastening systems by screws and compared to them has the advantage of a considerably lower assembly time.

For removing the cover 13 it is sufficient to insert the point of a tool such as for example a screwdriver, in the seat 70 through the inclined surface 74 and to raise the pin 60 towards its pulled out position (as soon as the head 68 comes out from the cavity 7C the further extraction movement of the pin 60 can be obtained by taking the pin with two fingers). After raising the pin 60, the stop portion 52 returns elastically in its underformed position in which it is free to pass through the hole 30.

As shown in figure 3, in the inserted position the heads of the pins 68 are substantially flush with the upper surface of the cover 13. This characteristic can be used for applying a seal against the non-authorized opening of the box 10. In fact, such seal could be simply formed by an adhesive label to be applied on the upper surface of the cover 13 so as to cover the head of at least one pin 68. since for opening the box 10 it is necessary to raise the pins 60, a torn label shows that the box has been opened.

## Claims

1. A box for electric material, comprising:
- a box-shaped base (12) having an aperture (40),
- a removable cover (13) adapted to close said aperture (40), and
- means for fixing the cover (13) to the base (12),
characterized in that said fixing means comprise:
- at least one engagement seat (22) provided in the base (12) and having a through hole (30),
- at least one tubular element (50) fixed to the cover (13) and having elastically deformable stop portion (52) adapted to assume a disengagement position in which it is free to pass through said hole (30) and an engagement position in which it interferes with the hole (30), and
- a pin (60) slidable inside said tubular element (50) and movable between an inserted position in which it interacts with said stop portion (52) for maintaining the same in the engagement position, and a pulled out position in which it leaves the stop portion (52) free to assume its disengagement position.

2. A box according to claim 1, characterized in that said stop portion (52) comprises a plurality of stop tabs (56) separated from each other by longitudinal through slots (54), said stop tabs (56) being formed integrally at the end of said tubular element (50).

3. A box according to claim 2, characterized in that said through hole (30) has a cylindrical portion (34) and a frusto-conical portion (36) against which are pressed said stop tabs (56) in the engagement position.

4. A box according to claim 1, characterized in that the pin (60) and the tubular element (50) are provided with respective annular stop projections (62, 64) adapted to prevent an accidental removal of the pin (60).

5. A box according to claim 1, characterized in that the pin (60) has a head (68) which in said inserted position is housed in a seat (70) formed in the upper surface of the cover (13), an intermediate portion (62) with a smaller diameter than that of the head (68) being interposed between the head (68) and the stem of the pin (60).

6. A box according to claim 5, characterized in that in the cover (13) is formed at least one inclined surface (74) which connects the upper surface of the cover (13) with the bottom of seat (70) adapted to receive the head (68) of the pin (60).

7. A box according to any of the preceding claims, characterized in that the cover (13) has a perimetral seat (46) adapted to contain a seal which in the closed position of the cover (13) is compressed against a perimetral surface (48) of the base (12).

## Patentansprüche

1. Gehäuse für elektrische Geräte, umfassend:
- ein kastenförmiges Unterteil (12) mit einer Öffnung (40),
- einen zum Verschließen der Öffnung (40) geeigneten, abnehmbaren Deckel (13), und
- Mittel zur Befestigung des Deckels (13) an dem Unterteil (12),
dadurch gekennzeichnet, daß die Befestigungsmittel umfassen:
- zumindest einen Paßsitz (22), der in dem Unterteil (12) vorgesehen ist und eine Durchgangsöffnung (30) aufweist,
- zumindest ein rohrförmiges Element (50), das an dem Deckel (13) befestigt ist und einen elastisch verformbaren Anschlagabschnitt (52) aufweist, der zur Annahme einer Ausrückstellung, in der er die Öffnung (30) frei passieren kann, und einer Eingriffstellung, in der er in die Öffnung (30) eingreift, geeignet ist, und
- einen Sperrstift (60), der in dem rohrförmigen Element (50) verschiebbar und zwischen einer eingesteckten Stellung, in der er mit dem Anschlagabschnitt (52) zusammenwirkt, um diesen in der Eingriffstellung zu halten, und einer herausgezogenen Stellung, in der er den Anschlagabschnitt (52) zur Annahme seiner Ausrückstellung freigibt, beweglich ist.

2. Gehäuse gemäß Anspruch 1, dadurch gekennzeichnet, daß der Anschlagabschnitt (52) eine Vielzahl von Anschlagnasen (56) umfaßt, die durch längs verlaufende Durchgangsschlitze (54) voneinander getrennt sind, wobei die Anschlagnasen (56) am Ende des rohrförmigen Elementes (50) einstückig angeformt sind.

3. Gehäuse gemäß Anspruch 2, dadurch gekennzeichnet, daß die Durchgangsöffnung (30) einen zylindrischen Abschnitt (34) und einen kegelstumpfförmigen Abschnitt (36) aufweist, gegen die die Anschlagnasen (56) in der Eingriffstellung gepreßt werden.

4. Gehäuse gemäß Anspruch 1, dadurch gekennzeichnet, daß der Sperrstift (60) und das rohrförmige Element (50) jeweils mit ringförmigen Anschlagvorsprüngen (62, 64) versehen sind, die geeignet sind, ein zufälliges Entfernen des Sperrstiftes (60) zu verhindern.

5. Gehäuse gemäß Anspruch 1, dadurch gekennzeichnet, daß der Sperrstift (60) einen Kopf (68) aufweist, der in der eingesteckten Stellung in einen in der Oberseite des Deckels (13) ausgeformten Sitz (70) eingebettet ist, wobei zwischen dem Kopf (68) und dem Schaft des Sperrstiftes (60) ein Zwischenteil (72) mit einem kleineren Durchmesser als der Kopf (68) angeordnet ist.

6. Gehäuse gemäß Anspruch 5, dadurch gekennzeichnet, daß in dem Deckel (13) zumindest eine Schrägfläche (74) ausgebildet ist, die die Oberseite des Deckels (13) mit dem unteren Ende des zur Aufnahme des Kopfes (68) des Sperrstiftes (60) geeigneten Sitzes (70) verbindet.

7. Gehäuse gemäß einem der vorhergehenden Ansprüche, dadurch gekennzeichnet, daß der Deckel (13) einen Ringsitz (46) aufweist, der so ausgelegt ist, daß er eine Dichtung enthält, die in der geschlossenen Stellung des Deckels (13) an eine Ringfläche (48) des Unterteils (12) angedrückt wird.

## Revendications

1. Boîte pour matériel électrique, comprenant :
une base (12) en forme de boîte ayant un orifice (40),
un couvercle amovible (13) destiné à fermer l'orifice (40), et
un dispositif de fixation du couvercle (13) à la base (12),
caractérisée en ce que le dispositif de fixation comprend :
au moins un siège de coopération (22) placé dans la base (12) et ayant un trou débouchant (30),
au moins un élément tubulaire (50) fixé au couvercle (13) et ayant une partie d'arrêt déformable élastiquement (52) destinée à prendre une position de séparation dans laquelle elle est libre de passer dans le trou (30) et une position de coopération dans laquelle elle est au contact du trou (30), et
une broche (60) destinée à coulisser dans l'élément tubulaire (50) et mobile entre une position insérée dans laquelle elle interagit avec la partie d'arrêt (52) pour maintenir celle-ci en position de coopération, et une partie extraite dans laquelle elle laisse la partie d'arrêt (52) libre de prendre sa position de séparation.

2. Boîte selon la revendication 1, caractérisée en ce que la partie d'arrêt (52) a plusieurs pattes d'arrêt (56) séparées les unes des autres par des fentes longitudinales (54), les pattes d'arrêt (56) étant formées en une seule pièce à l'extrémité de l'élément tubulaire (50).

3. Boîte selon la revendication 2, caractérisée en ce que le trou débouchant (30) a une partie cylindrique (34) et une partie tronconique (36) contre lesquelles sont repoussées les pattes d'arrêt (56) en position de coopération.

4. Boîte selon la revendication 1, caractérisée en ce que la broche (60) et l'élément tubulaire (50) ont des saillies annulaires respectives d'arrêt (62, 64) destinées à empêcher une extraction intempestive de la broche (60).

5. Boîte selon la revendication 1, caractérisée en ce que la broche (60) a une tête (68) qui, en position insérée, est logée dans un siège (70) formé dans la surface supérieure du couvercle (13), une partie intermédiaire (62) de plus petit diamètre que la tête (68) étant placée entre la tête (68) et la tige de la broche (60).

6. Boîte selon la revendication 5, caractérisée en ce qu'au moins une surface inclinée (74) qui relie la surface supérieure du couvercle (13) au fond du siège (70) est formée dans le couvercle (13) et est destinée à loger la tête (68) de la broche (60).

7. Boîte selon l'une quelconque des revendications précédentes, caractérisée en ce que le couvercle (13) a un siège périphérique (46) destiné à contenir un joint d'étanchéité qui, en position de fermeture du couvercle (13), est comprimé contre une surface périphérique (48) de la base (12).
